# EUROPEAN PATENT SPECIFICATION

(11) **EP 4 205 949 B1**
(45) Date of publication and mention of the grant of the patent: **26.02.2025**
(21) Application number: 22215249.8
(22) Date of filing: 21.12.2022
(51) Int. Cl.: B29C 63/00, B27D 5/00

(54) **IMPROVED EDGE-BANDING MACHINE AND OPERATING METHOD THEREOF**
VERBESSERTE KANTENBANDMASCHINE UND DEREN BETRIEBSVERFAHREN
MACHINE DE CERCLAGE DE BORD AMÉLIORÉE ET SON PROCEDE DE FONCTIONNEMENT

(30) Priority: 30.12.2021 IT 202100033107
(43) Date of publication of application: 05.07.2023
(73) Proprietor: SCM Group S.p.A., 47921 Rimini (RN) (IT)
(72) Inventor: GOLIN, Agostino, 47921 Rimini (RN) (IT); PEGORARO, Raffaele, 47921 Rimini (RN) (IT)
(74) Representative: Tiburzi, Andrea

(56) References cited:
- WO-A1-01/07152
- WO-A1-2016/112232
- DE-A1- 102006 060 269

## Description

The present invention relates to an improved edge-beading machine and operating method thereof.

### Field of invention

More specifically, the invention relates to an edge-banding machine, suitable for applying a finishing tape to a panel made of wood, metal, ceramic, plastic, glass, composite materials and the like, equipped with two or more glue pots, for containing and application of adhesives for gluing said tape.

In the following, the description will be addressed to an edge banding machine for wooden panels and similar materials. However, it is clear that the same description should not be considered limited to this specific use.

### Prior art

As is well known, there are currently edge-banding machines in which a piece, in particular a panel made of wood, composite material, plastic, chipboard or other material, is moved in an advancement direction through an advancement plane, and is subjected, while advancing, to various machining, such as grinding, edge gluing, butting, trimming, edge gleaning, edge rounding, edge scraping and scraping off any excess glue.

Edge-banding machines are also known comprising two or more glue units, each comprising a glue pot for containing and applying glues. The adhesives contained in each of said glue pots may differ in type and/or cooler.

In these machines, when it is necessary to replace a glue pot or to carry out maintenance on the glue units, in which the glue pots are installed, the machine must be stopped. In fact, for safety reasons, it is necessary to prevent the movement and passage of the panels during the operator's intervention.

In particular, during the operations to replace a glue pot, the respective glue unit is moved in a direction perpendicular to the advancement direction of the piece and lying on the geometric plane passing through the advancement plane of the piece, so as to move said glue pot away from the advancement plane of said piece, and allow the replacement or maintenance operations with greater safety.

The relevant background also comprises the international patent application WO 2016/112232 A1.

It is evident that this is detrimental in economic terms, since, with each replacement of a finished glue pot or in the case of ordinary maintenance, the machining of the pieces and therefore production must be interrupted.

### Scope of the invention

In the light of the above, it is, therefore, scope of the present invention to provide a beading machine which overcomes the drawbacks of the prior art.

In particular, the object of the present invention is to provide a beading machine which is able to allow the reduction of machine stops, increasing its productivity.

A further object of the present invention is that to allow the actions of replacement of glue pots and maintenance of glue units, by an operator, in complete safety, avoiding stopping the machine.

### Object of the invention

It is therefore object of the present invention a machine for edge-banding at least one side surface or edge of a piece, such as a panel made of wood, metal, glass, ceramic, composite materials, plastic or the like, by means of an edging tape, comprising an advancement plane for supporting and advancing said piece along an advancement direction; a first glue group, comprising a first glue tank, for containing a respective glue for edge-banding of said piece, wherein said first glue group is movable between an operating position, wherein said first glue group is capable of dispensing glue on said piece and/or said edging tape, and an exclusion position, wherein said first glue group is spaced from said advancement plane with respect to said operating position to allow an operator to carry out at least one operation on said gluing unit, in particular on said glue tank; and at least a second gluing unit, comprising a second glue tank, for containing a respective glue for the edge-banding of said piece; characterized in that it comprises at least one bulkhead movable between a rest position, wherein said bulkhead is not interposed between said first gluing unit and said advancement plane, and a working position, wherein, when said first glue group and in said exclusion position, said bulkhead is interposed between said first glue group and said advancement plane, so as to create a safety barrier for an operator who carries out said at least one operation.

Always according to the invention, said bulkhead is moved in a direction parallel to an advancement direction of said piece to pass from said rest position to said working position and vice-versa.

Still according to the invention, said first gluing unit may be moved in a direction perpendicular to said advancement direction of said piece to pass from said operating position to said exclusion position and vice-versa.

Advantageously according to the invention, said first glue group may comprise a first actuator, such as an actuator of the pneumatic, electric or hydraulic type, to move said first glue group from said operating position to said exclusion position and vice-versa.

Preferably according to the invention, said machine may comprise a first sliding actuator, coupled to said bulkhead, to move said bulkhead from said rest position to said working position and/or vice-versa.

Further according to the invention, said at least one second glue group may be movable between a respective operating position, wherein said second glue group is capable of dispensing glue on said piece and/or on said edging tape, and a respective exclusion position, wherein said second glue unit is spaced from said advancement plane with respect to said respective operating position, and said bulkhead is movable between said rest position and a further working position, wherein, when said second glue unit is in the respective exclusion position, said bulkhead is interposed between said second glue unit and said advancement plane.

Always according to the invention, said second glue group may comprise a second actuator, such as a pneumatic, electric or hydraulic actuator, to move said second glue group from said respective operative position to said respective exclusion position and/or vice-versa.

Still according to the invention, said machine may comprise a second sliding actuator, coupled to said bulkhead, to move said bulkhead from said rest position to said further working position and/or vice-versa.

Advantageously according to the invention, said first sliding actuator may move said bulkhead from said rest position to said further working position and/or vice-versa.

Further according to the invention, second glue group may be movable between a respective operating position, wherein said second glue group is capable of dispensing glue on said piece and/or said edging tape, and a respective exclusion position, wherein said second glue unit is spaced from said advancement plane with respect to said respective operating position to allow an operator to carry out at least one operation on said glue unit, in particular on said glue tank, and said machine may comprise a second bulkhead, movable between a respective rest position, wherein said second bulkhead is not interposed between said second glue group and said advancement plane, and a respective working position, wherein, when said second glue group is in said respective exclusion position, said second bulkhead is interposed between de the second glue unit and said advancement plane, so as to create a safety barrier for an operator who carries out said at least one operation.

It is further object of the present invention a method for edge-banding at least one side surface or an edge of a piece, such as a panel made of wood, metal, glass, ceramic, composite materials, plastic or the like, by means of an edging tape, comprising the steps of: (a) moving said piece by means of an advancement plane along an advancement direction; (b) applying glue on said piece and/or on said edging tape by means of a first glue group placed in an operative position; (c) moving said first glue group from said operating position to said exclusion position, wherein said first glue group is spaced from said advancement plane with respect to said operating position; and (d) moving a bulkhead between a rest position, wherein said bulkhead is not interposed between said first glue unit and said advancement plane, and a working position, wherein, when said first glue group is in said exclusion position, said bulkhead is interposed between said first glue group and said advancement plane.

### Brief description of the figures

The present invention will be now described, for illustrative but not limitative purposes, according to its preferred embodiments, with particular reference to the figures of the enclosed drawings, wherein:
figure 1 shows a rear perspective view of an improved edge-bending machine according to the invention;
figure 2 shows a schematic front view of a detail of the machine of figure 1, in which some glue units are shown;
figure 3 shows a schematic top view of a detail of the machine of figure 1, in which some glue units are shown;
figure 4 shows a schematic top view of the same detail represented in figure 3, in which the operation of said glue-units according to the invention is schematized;
figure 5 shows a front view of the same detail of figure 2 shown in greater detail; and
figure 6 shows a top view of the same detail of figure 3 shown in greater detail.

### Detailed description

In the various figures, similar parts will be indicated with the same reference numbers.

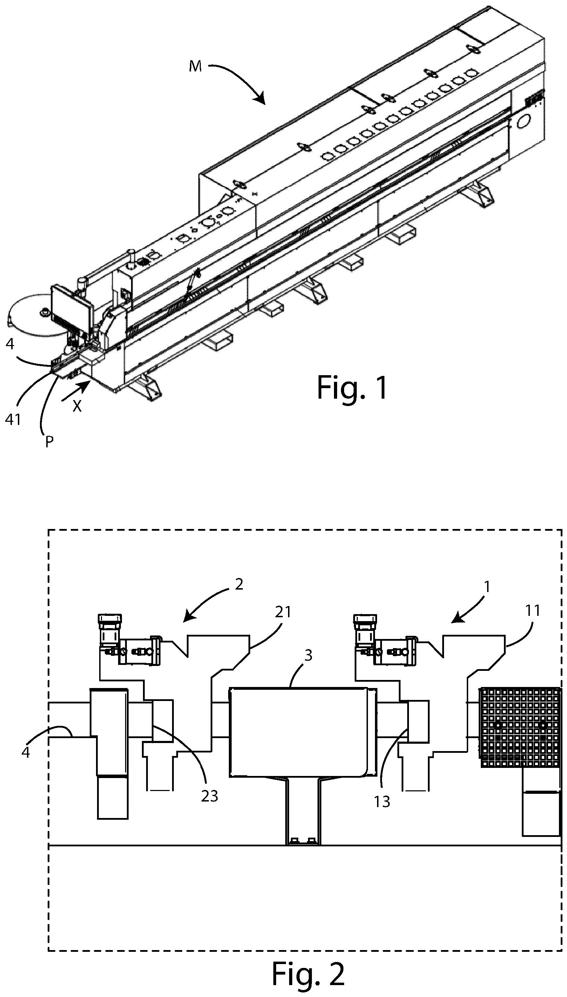

With reference to figures 1, 2 and 3, a machine M can be observed for edging of at least one lateral surface or edge of a piece P, such as a panel made of wood, metal, glass, ceramic, composite materials, plastic or the like, by a edging tape N.

The machine M comprises an advancement plane 4 for supporting and advancing the piece P, a first glue unit 1, for gluing said edging tape on the piece P with a respective glue, and at least one second gluing unit 2, for gluing the edging tape on piece P, with a glue the same as the first or different in type and/or color. The machine M also includes a magazine 5 for containing said edging tape N.

The advancement plane 4 comprises a conveyor belt 41, which allows the advancement of the piece P to be edge-banded along an advancement direction X, so that said piece P can be subjected to various machining. These machining can be at least one of the following processes: rectification of the panel to be edge-banded, gluing of the finishing edge on the narrow side of the panel, end milling, trimming, gleaning of the edge, rounding and scraping of the applied edge, and scraping of any excess glue from the bottom and top surfaces of the panel and from the applied edge-band. These machining are performed by specific groups or working units generally arranged in series on one side of the advancement plane 4.

In other embodiments, various series of different working groups or units may be provided, according to the technical machining requirements.

In some embodiments the advancement plane 4 comprises a belt or transport rollers. In other embodiments, the advancement plane can be moved by advancement chains.

The first glue unit 1 comprises a first glue pot 11, for containing a first type of glue, in particular, but not necessarily, a solid glue. The first glue group 1 also comprises heating means, for heating said first glue, a first glue roller 13, for applying said first glue on said piece P and/or said edging tape N.

As generally occurs in glue units such as the one described, said first glue pot 11 is placed in the upper or in the upper part with respect to said first glue unit 1, and said first glue roller 13 is placed in the lower or in the lower part of said first glue unit 1.

Said heating means are arranged in the first glue unit 1, so that, in use, the glue contained in the first glue pot 11 is heated, causing said glue to pass from a solid state to a liquid state.

The structure of the second gluing unit 2 is similar to that of the first glue unit 1. Said second gluing unit 2, in fact, comprises a second glue tank 21, for containing a second glue, in particular a solid glue, means for heating said second glue, a second glue roller 23 for applying said second glue on the piece P and/or on the edging tape N.

In a first preferred embodiment, said first glue unit 1 is equipped with a first actuator 12, in particular an actuator of the pneumatic, electric or hydraulic type. The first actuator 12 is configured to move the glue unit 1 from an operating position, in which the first glue unit 1 is capable of dispensing glue on the piece P and/or on the edging tape N, to an exclusion position, in which the first glue group 1 is spaced from said advancement plane 4 with respect to said operating position, and vice versa.

In a second preferred embodiment, the first glue unit 1 is equipped with a first actuator 12, and the second gluing unit 2 is equipped with a second actuator 22, in particular, an actuator of the pneumatic, electric or hydraulic type, having a function analogous to that of the first actuator 12.

The machine M is also equipped with a bulkhead 3, which is in turn equipped with a first sliding actuator 6, in particular an actuator of the pneumatic, electric or hydraulic type, and movable in a direction parallel to said advancement direction X of said piece P.

The operation of the improved edge-banding machine M described above takes is follows.

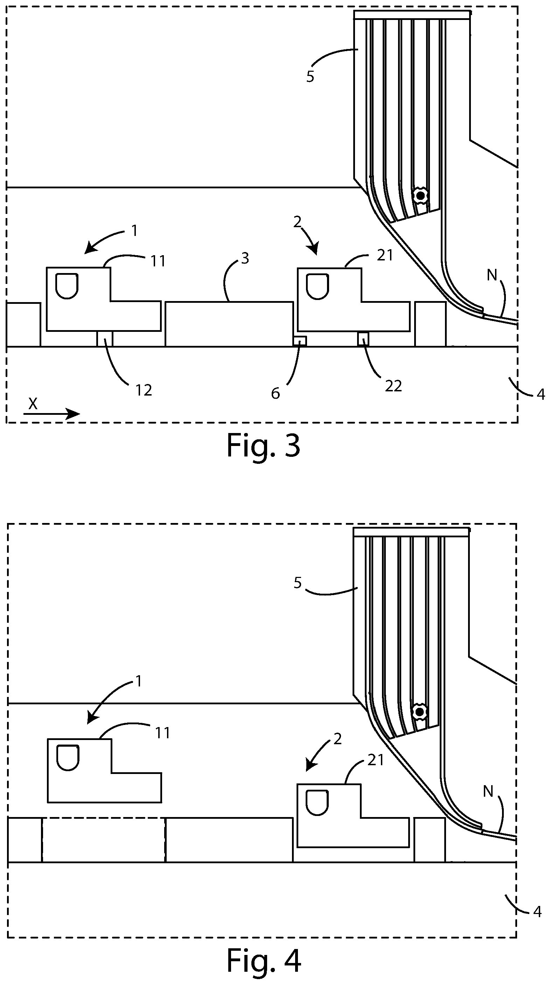

With reference to figure 4, in the first embodiment, when it is necessary to replace the glue pot 11 of the first glue unit 1, or carry out any maintenance on the glue unit 1 itself, the first actuator 12 moves said first glue unit 1 in such a way that passes from the operating position to the exclusion position, thus finding itself spaced from the advancement plane 4, on which the pieces P to be machined continue to slide and to be moved in the advancement direction X.

In other embodiments the first glue group 1 can be moved manually.

With reference to the aforementioned first preferred embodiment, moreover, the bulkhead 3 is moved, by means of said first sliding actuator 6, from a rest position, in which said bulkhead 3 is not interposed between the first glue unit 1, and the advancement plane 4, and a working position in which, when the first glue group 1 is in said exclusion position, the bulkhead 3 is interposed between said first glue group 1 and the advancement plane 4.

In further embodiments the bulkhead 3 can be moved manually.

In this way an operator can replace the glue pot or carry out any maintenance operation, suitably protected from the moving parts of the machine M, such as the working units or the advancement plane 4.

Once the replacement or maintenance operations have been completed, the bulkhead 3 is moved again by the first sliding actuator 6, so that it is not placed between the first glue unit 1 and the advancement plane 4, so that the first actuator 12 can move the first glue group 1 from the extracted position to the operating position.

In the second embodiment described, the second actuator 22 moves the second gluing unit 2, preferably always in a direction perpendicular to the advancement direction X, from a respective operating position, in which the second gluing unit 2 is capable of dispensing glue on the piece P and/or said edging tape N, and a respective exclusion position, in which the second gluing unit 2 is spaced from the advancement plane 4 with respect to said respective operating position, to allow possible glue tank 21 replacement operations or maintenance of the gluing unit 2 itself.

In other embodiments the second gluing unit 2 can be moved manually.

In this embodiment of the machine M the bulkhead 3 can be moved, by means of said first sliding actuator 6, from the rest position to a further working position, in which, when the second gluing unit 2 is in the respective exclusion position, the bulkhead 3 is interposed between the second gluing unit 2 and the advance plane 4.

In other embodiments the bulkhead 3 can be moved from said rest position to said further working position by means of a second sliding actuator.

In a third embodiment of the machine M, the second gluing unit 2 is movable between a respective operating position, in which the second gluing unit 2 is capable of dispensing glue on the piece P and/or on the edging tape N, and a respective exclusion position, in which the second gluing unit 2 is spaced apart from the advancement plane 4 with respect to said respective operating position. Furthermore, the machine M comprises a second bulkhead, movable between a respective rest position, which is not interposed between the second gluing unit 2 and the advancement plane 4, and a respective working position, in which, when said second gluing unit 2 is in the respective exclusion position, the second bulkhead is interposed between the second gluing unit 2 and said advance plane 4, so as to allow for any replacement of the glue tank 21 or the execution of maintenance operations.

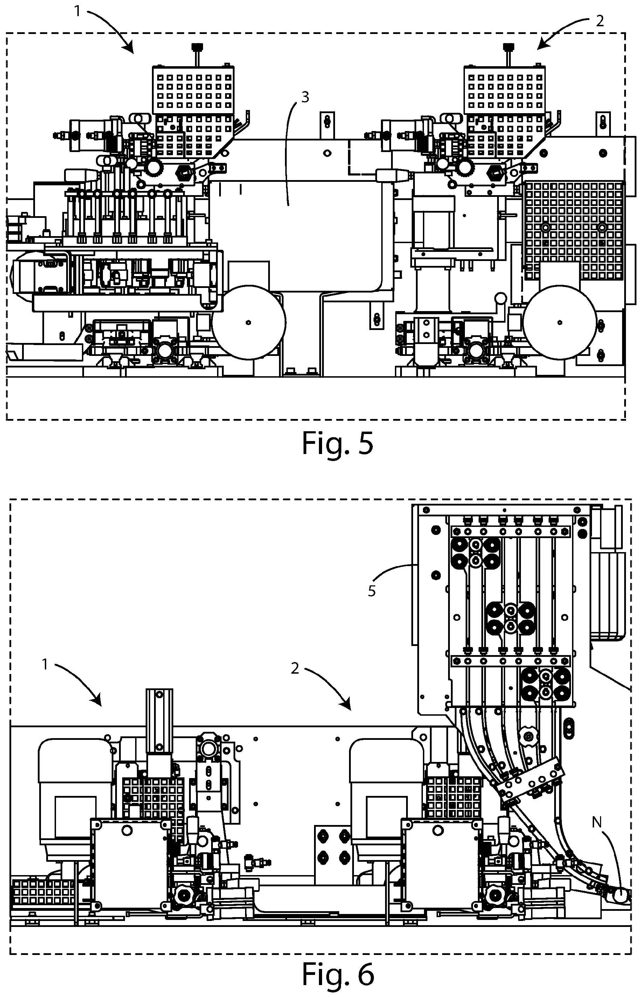

Figures 5 and 6 show an edge-banding machine M structurally analogous to the one shown schematically in figures 1-4. Similar parts have been indicated with similar reference numbers.

The glue units 1 and 2 and the tape magazine 5 can be recognized in particular.

The arrangement of the bulkhead 3 is also observed.

### Advantages

An advantage of the present invention is that of reducing machine stops in edge-banding machines equipped with at least two glue units, due to the replacement of the glue pots and/or maintenance of the glue units themselves.

Another advantage of the invention is that of making it possible to replace the glue pots and maintain the glue units without endangering the operator assigned to said operations.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Machine (M) for edge-banding at least one side surface or edge of a piece (P), such as a panel made of wood, metal, glass, ceramic, composite materials, plastic or the like, by means of an edging tape (N), comprising
an advancement plane (4) for supporting and advancing said piece (P) along an advancement direction (X);
a first glue group (1), comprising a first glue tank (11), for containing a respective glue for edge-banding of said piece (P), wherein said first glue group (1) is movable between an operating position, wherein said first glue group (1) is capable of dispensing glue on said piece (P) and/or said edging tape (N), and an exclusion position, wherein said first glue group (1) is spaced from said advancement plane (4) with respect to said operating position to allow an operator to carry out at least one operation on said gluing unit (1), in particular on said glue tank (11); and
at least a second gluing unit (2), comprising a second glue tank (21), for containing a respective glue for the edge-banding of said piece (P);
**characterized in that** it comprises at least one bulkhead (3) movable between a rest position, wherein said bulkhead (3) is not interposed between said first gluing unit (1) and said advancement plane (4), and a working position, wherein, when said first glue group (1) and in said exclusion position, said bulkhead (3) is interposed between said first glue group (1) and said advancement plane (4), so as to create a safety barrier for an operator who carries out said at least one operation.

2. Machine (M) according to the preceding claim, **characterized in that** said bulkhead (3) is moved in a direction parallel to an advancement direction (X) of said piece (P) to pass from said rest position to said working position and vice-versa.

3. Machine (M) according to any one of the preceding claims, **characterized in that** said first gluing unit (1) is moved in a direction perpendicular to said advancement direction (X) of said piece (P) to pass from said operating position to said exclusion position and vice-versa.

4. Machine (M) according to any one of the preceding claims, **characterized in that** said first glue group (1) comprises a first actuator (12), such as an actuator of the pneumatic, electric or hydraulic type, to move said first glue group (1) from said operating position to said exclusion position and vice-versa.

5. Machine (M) according to any one of the preceding claims, **characterized in that** it comprises a first sliding actuator (6), coupled to said bulkhead (3), to move said bulkhead (3) from said rest position to said working position and/or vice-versa.

6. Machine (M) according to any one of the preceding claims, **characterized**
**in that** said at least one second glue group (2) is movable between a respective operating position, wherein said second glue group (2) is capable of dispensing glue on said piece (P) and/or on said edging tape (N), and a respective exclusion position, wherein said second glue unit (2) is spaced from said advancement plane (4) with respect to said respective operating position, and
**in that** said bulkhead (3) is movable between said rest position and a further working position,
wherein, when said second glue unit (2) is in the respective exclusion position, said bulkhead (3) is interposed between said second glue unit (2) and said advancement plane (4).

7. Machine (M) according to the preceding claim, **characterized in that** said second glue group (2) comprises a second actuator (22), such as a pneumatic, electric or hydraulic actuator, to move said second glue group (2) from said respective operative position to said respective exclusion position and/or vice-versa.

8. Machine (M) according to any one of claims 6 or 7, **characterized in that** it comprises a second sliding actuator, coupled to said bulkhead (3), to move said bulkhead (3) from said rest position to said further working position and/or vice-versa.

9. Machine (M) according to any one of claims 6 or 7, **characterized in that** said first sliding actuator (6) moves said bulkhead (3) from said rest position to said further working position and/or vice-versa.

10. Machine (M) according to any one of claims 1 - 5, **characterized**
**in that** said second glue group (2) is movable between a respective operating position, wherein said second glue group (2) is capable of dispensing glue on said piece (P) and/or said edging tape (N), and a respective exclusion position, wherein said second glue unit (2) is spaced from said advancement plane (4) with respect to said respective operating position to allow an operator to carry out at least one operation on said glue unit (2), in particular on said glue tank (21), and
**in that** it comprises a second bulkhead, movable between a respective rest position, wherein said second bulkhead is not interposed between said second glue group (2) and said advancement plane (4), and a respective working position, wherein, when said second glue group (2) is in said respective exclusion position, said second bulkhead is interposed between de the second glue unit (2) and said advancement plane (4), so as to create a safety barrier for an operator who carries out said at least one operation.

11. Method for edge-banding at least one side surface or an edge of a piece (P), such as a panel made of wood, metal, glass, ceramic, composite materials, plastic or the like, by means of an edging tape (N), comprising the steps of:
(a) moving said piece (P) by means of an advancement plane (4) along an advancement direction (X);
(b) applying glue on said piece (P) and/or on said edging tape (N) by means of a first glue group (1) placed in an operative position;
(c) moving said first glue group (1) from said operating position to said exclusion position, wherein said first glue group (1) is spaced from said advancement plane (4) with respect to said operating position; and
(d) moving a bulkhead (3) between a rest position, wherein said bulkhead (3) is not interposed between said first glue unit (1) and said advancement plane (4), and a working position, wherein, when said first glue group (1) is in said exclusion position, said bulkhead (3) is interposed between said first glue group (1) and said advancement plane (4).

## Patentansprüche

1. Maschine (M) zum Kantenanleimen mindestens einer Seitenfläche oder Kante eines Werkstücks (P), wie z.B. einer Platte aus Holz, Metall, Glas, Keramik, Verbundwerkstoffen, Kunststoff oder dergleichen, mit Hilfe eines Kantenanlegebandes (N), umfassend eine Vorschubebene (4) zum Tragen und Vorschieben des Werkstücks (P) entlang einer Vorschubrichtung (X); eine erste Leimgruppe (1), die einen ersten Leimtank (11) umfasst, um einen entsprechenden Leim zum Kantenanleimen des Stücks (P) zu enthalten, wobei die erste Leimgruppe (1) zwischen einer Betriebsposition, in der die erste Leimgruppe (1) in der Lage ist, Leim auf das Stück (P) und/oder das Kantenband (N) abzugeben und einer Ausschlussposition, in der die erste Leimgruppe (1) von der Vorschubebene (4) in Bezug auf die Betriebsposition beabstandet ist, um einem Bediener zu ermöglichen, mindestens eine Operation an der Leimeinheit (1), insbesondere an dem Leimtank (11), auszuführen; und mindestens eine zweite Leimeinheit (2), die einen zweiten Leimtank (21) umfasst, um einen entsprechenden Leim für die Kantenanleimung des Stücks (P) zu enthalten; **dadurch gekennzeichnet, dass** sie mindestens eine Trennwand (3) umfasst, die zwischen einer Ruheposition, in der die Trennwand (3) nicht zwischen der ersten Leimeinheit (1) und der Vorschubebene (4) angeordnet ist, und einer Arbeitsposition beweglich ist, in der die Trennwand (3) zwischen der ersten Leimgruppe (1) und der Vorschubebene (4) angeordnet ist, wenn sich die erste Leimgruppe (1) in der Ausschlussposition befindet, um eine Sicherheitsbarriere für einen Bediener zu schaffen, der den mindestens einen Vorgang ausführt.

2. Maschine (M) nach dem vorhergehenden Anspruch, **dadurch gekennzeichnet, dass** die Trennwand (3) in einer Richtung parallel zu einer Vorschubrichtung (X) des Teils (P) bewegt wird, um von der Ruheposition in die Arbeitsposition und umgekehrt zu gelangen.

3. Maschine (M) nach einem der vorhergehenden Ansprüche, **dadurch gekennzeichnet, dass** die erste Klebeeinheit (1) in einer Richtung senkrecht zu der Vorschubrichtung (X) des Werkstücks (P) bewegt wird, um von der Arbeitsposition in die Ausschlussposition zu gelangen und umgekehrt.

4. Maschine (M) nach einem der vorhergehenden Ansprüche, **dadurch gekennzeichnet, dass** die erste Leimgruppe (1) einen ersten Aktuator (12), wie einen Aktuator des pneumatischen, elektrischen oder hydraulischen Typs, umfasst, um die erste Leimgruppe (1) von der Betriebsposition in die Ausschlussposition und umgekehrt zu bewegen.

5. Maschine (M) nach einem der vorhergehenden Ansprüche, **dadurch gekennzeichnet, dass** sie ein erstes Gleitstellglied (6) umfasst, das mit der Trennwand (3) gekoppelt ist, um die Trennwand (3) von der Ruheposition in die Arbeitsposition und/oder umgekehrt zu bewegen.

6. Maschine (M) nach einem der vorhergehenden Ansprüche, **dadurch gekennzeichnet dass** die mindestens eine zweite Leimgruppe (2) zwischen einer jeweiligen Betriebsposition, in der die zweite Leimgruppe (2) in der Lage ist, Leim auf das Stück (P) und/oder auf das Kantenband (N) abzugeben, und einer jeweiligen Ausschlussposition, in der die zweite Leimeinheit (2) von der Vorschubebene (4) in Bezug auf die jeweilige Betriebsposition beabstandet ist, bewegbar ist, und dass die Trennwand (3) zwischen der Ruheposition und einer weiteren Arbeitsposition beweglich ist, wobei die Trennwand (3) zwischen der zweiten Leimeinheit (2) und der Vorschubebene (4) angeordnet ist, wenn sich die zweite Leimeinheit (2) in der jeweiligen Ausschlussposition befindet.

7. Maschine (M) nach dem vorhergehenden Anspruch, **dadurch gekennzeichnet, dass** die zweite Leimgruppe (2) einen zweiten Aktuator (22), wie einen pneumatischen, elektrischen oder hydraulischen Aktuator, umfasst, um die zweite Leimgruppe (2) von der jeweiligen Betriebsposition in die jeweilige Ausschlussposition und/oder umgekehrt zu bewegen.

8. Maschine (M) nach einem der Ansprüche 6 oder 7, **dadurch gekennzeichnet, dass** sie ein zweites, mit der Trennwand (3) gekoppeltes Gleitstellglied umfasst, um die Trennwand (3) aus der Ruheposition in die weitere Arbeitsposition und/oder umgekehrt zu bewegen.

9. Maschine (M) nach einem der Ansprüche 6 oder 7, **dadurch gekennzeichnet, dass** das erste Gleitstellglied (6) die Trennwand (3) aus der Ruhestellung in die weitere Arbeitsstellung und/oder umgekehrt bewegt.

10. Maschine (M) nach einem der Ansprüche 1-5, **dadurch gekennzeichnet dass** die zweite Leimgruppe (2) zwischen einer jeweiligen Betriebsposition, in der die zweite Leimgruppe (2) in der Lage ist, Leim auf das Stück (P) und/oder das Kantenband (N) abzugeben, und einer jeweiligen Ausschlussposition beweglich ist, in der die zweite Leimeinheit (2) von der Vorschubebene (4) in Bezug auf die jeweilige Betriebsposition beabstandet ist, um einem Bediener zu ermöglichen, mindestens eine Operation an der Leimeinheit (2), insbesondere an dem Leimtank (21), durchzuführen, und dass sie eine zweite Trennwand umfasst, die zwischen einer jeweiligen Ruheposition, in der die zweite Trennwand nicht zwischen der zweiten Leimgruppe (2) und der Vorschubebene (4) angeordnet ist, und einer jeweiligen Arbeitsposition beweglich ist, in der, wenn sich die zweite Leimgruppe (2) in der jeweiligen Ausschlussposition befindet, die zweite Trennwand zwischen der zweiten Leimeinheit (2) und der Vorschubebene (4) angeordnet ist, um eine Sicherheitsbarriere für einen Bediener zu schaffen, der den mindestens einen Vorgang durchführt.

11. Verfahren zum Kantenanleimen mindestens einer Seitenfläche oder einer Kante eines Teils (P), wie einer Platte aus Holz, Metall, Glas, Keramik, Verbundwerkstoffen, Kunststoff oder dergleichen, mittels eines Kantenbandes (N), das die folgenden Schritte umfasst:
(a) Bewegen des Stücks (P) mit Hilfe einer Vorschubebene (4) entlang einer Vorschubrichtung (X);
(b) Auftragen von Klebstoff auf das Stück (P) und/oder auf das Kantenband (N) mittels einer ersten Klebstoffgruppe (1), die in eine Betriebsposition gebracht wird;
(c) Bewegen der ersten Leimgruppe (1) von der Betriebsposition in die Ausschlussposition, wobei die erste Leimgruppe (1) von der Vorschubebene (4) in Bezug auf die Betriebsposition beabstandet ist; und
(d) Bewegen einer Trennwand (3) zwischen einer Ruheposition, in der die Trennwand (3) nicht zwischen der ersten Leimeinheit (1) und der Vorschubebene (4) angeordnet ist, und einer Arbeitsposition, in der, wenn sich die erste Leimgruppe (1) in der Ausschlussposition befindet, die Trennwand (3) zwischen der ersten Leimgruppe (1) und der Vorschubebene (4) angeordnet ist.

## Revendications

1. Machine (M) de cerclage d'au moins une surface latérale ou d'un bord d'une pièce (P), telle qu'un panneau en bois, en métal, en verre, en céramique, en matériaux composites, en plastique ou similaire, au moyen d'une bande de placage (N), comprenant un plan d'avancement (4) pour supporter et faire avancer ladite pièce (P) le long d'une direction d'avancement (X); un premier groupe de colle (1), comprenant un premier réservoir de colle (11), pour contenir une colle respective pour le cerclage de bord de ladite pièce (P), dans lequel ledit premier groupe de colle (1) est mobile entre une position de fonctionnement, dans laquelle ledit premier groupe de colle (1) est capable de distribuer de la colle sur ladite pièce (P) et/ou ladite bande de chant (N), et une position d'exclusion, dans laquelle ledit premier groupe de colle (1) est écarté dudit plan d'avancement (4) par rapport à ladite position de fonctionnement pour permettre à un opérateur d'effectuer au moins une opération sur ladite unité d'encollage (1), en particulier sur ledit réservoir de colle (11); et au moins une deuxième unité d'encollage (2), comprenant un deuxième bac à colle (21), pour contenir une colle respective pour le cerclage de bord de ladite pièce (P); **caractérisé en ce qu'**il comprend au moins une cloison (3) mobile entre une position de repos, dans laquelle ladite cloison (3) n'est pas interposée entre ledit premier groupe d'encollage (1) et ledit plan d'avancement (4), et une position de travail, dans laquelle, lorsque ledit premier groupe d'encollage (1) et dans ladite position d'exclusion, ladite cloison (3) est interposée entre ledit premier groupe d'encollage (1) et ledit plan d'avancement (4), de manière à créer une barrière de sécurité pour un opérateur qui effectue ladite au moins une opération.

2. Machine (M) selon la revendication précédente, **caractérisée en ce que** ladite cloison (3) est déplacée dans une direction parallèle à une direction d'avancement (X) de ladite pièce (P) pour passer de ladite position de repos à ladite position de travail et vice-versa.

3. Machine (M) selon l'une quelconque des revendications précédentes, **caractérisée en ce que** ladite première unité d'encollage (1) est déplacée dans une direction perpendiculaire à ladite direction d'avancement (X) de ladite pièce (P) pour passer de ladite position de travail à ladite position d'exclusion et vice-versa.

4. Machine (M) selon l'une quelconque des revendications précédentes, **caractérisée en ce que** ledit premier groupe d'encollage (1) comprend un premier actionneur (12), tel qu'un actionneur de type pneumatique, électrique ou hydraulique, pour déplacer ledit premier groupe d'encollage (1) de ladite position de fonctionnement à ladite position d'exclusion et vice-versa.

5. Machine (M) selon l'une quelconque des revendications précédentes, **caractérisée en ce qu'**elle comprend un premier actionneur coulissant (6), couplé à ladite cloison (3), pour déplacer ladite cloison (3) de ladite position de repos à ladite position de travail et/ou vice-versa.

6. Machine (M) selon l'une quelconque des revendications précédentes, **caractérisée en ce que** ledit au moins un deuxième groupe de colle (2) est mobile entre une position de fonctionnement respective, dans laquelle ledit deuxième groupe de colle (2) est capable de distribuer de la colle sur ladite pièce (P) et/ou sur ladite bande de chant (N), et une position d'exclusion respective, dans laquelle ledit deuxième groupe de colle (2) est espacé dudit plan d'avancement (4) par rapport à ladite position de fonctionnement respective, et **en ce que** ladite cloison (3) est mobile entre ladite position de repos et une autre position de travail, dans laquelle, lorsque ladite deuxième unité de colle (2) est dans la position d'exclusion respective, ladite cloison (3) est interposée entre ladite deuxième unité de colle (2) et ledit plan d'avancement (4).

7. Machine (M) selon la revendication précédente, **caractérisée en ce que** ledit deuxième groupe de colle (2) comprend un deuxième actionneur (22), tel qu'un actionneur pneumatique, électrique ou hydraulique, pour déplacer ledit deuxième groupe de colle (2) de ladite position opérationnelle respective à ladite position d'exclusion respective et/ou vice-versa.

8. Machine (M) selon l'une quelconque des revendications 6 ou 7, **caractérisée en ce qu'**elle comprend un second actionneur coulissant, couplé à ladite cloison (3), pour déplacer ladite cloison (3) de ladite position de repos à ladite autre position de travail et/ou vice-versa.

9. Machine (M) selon l'une quelconque des revendications 6 ou 7, **caractérisée en ce que** ledit premier actionneur coulissant (6) déplace ladite cloison (3) de ladite position de repos à ladite autre position de travail et/ou vice-versa.

10. Machine (M) selon l'une quelconque des revendications 1 à 5, **caractérisée en ce que en ce que** ledit deuxième groupe de colle (2) est mobile entre une position de travail respective, dans laquelle ledit deuxième groupe de colle (2) est capable de distribuer de la colle sur ladite pièce (P) et/ou ledit ruban de chant (N), et une position d'exclusion respective, dans laquelle ledit deuxième groupe de colle (2) est éloigné dudit plan d'avancement (4) par rapport à ladite position de travail respective pour permettre à un opérateur d'effectuer au moins une opération sur ledit groupe de colle (2), en particulier sur ledit réservoir de colle (21), et **en ce qu'**il comprend une deuxième cloison, mobile entre une position de repos respective, dans laquelle ladite deuxième cloison n'est pas interposée entre ledit deuxième groupe de colle (2) et ledit plan d'avancement (4), et une position de travail respective, dans laquelle, lorsque ledit deuxième groupe de colle (2) est dans ladite position d'exclusion respective, ladite deuxième cloison est interposée entre le deuxième groupe de colle (2) et ledit plan d'avancement (4), de manière à créer une barrière de sécurité pour un opérateur qui effectue ladite au moins une opération.

11. Procédé de cerclage d'au moins une surface latérale ou d'un bord d'une pièce (P), telle qu'un panneau en bois, en métal, en verre, en céramique, en matériaux composites, en plastique ou similaires, au moyen d'une bande de placage (N), comprenant les étapes de:
(a) déplacer ladite pièce (P) au moyen d'un plan d'avancement (4) le long d'une direction d'avancement (X);
(b) appliquer de la colle sur ladite pièce (P) et/ou sur ladite bande de chant (N) au moyen d'un premier groupe de colle (1) placé dans une position opérationnelle;
(c) déplacer ledit premier groupe de colle (1) de ladite position de fonctionnement à ladite position d'exclusion, dans laquelle ledit premier groupe de colle (1) est espacé dudit plan d'avancement (4) par rapport à ladite position de fonctionnement; et
(d) déplacer une cloison (3) entre une position de repos, dans laquelle ladite cloison (3) n'est pas interposée entre ledit premier groupe de colle (1) et ledit plan d'avancement (4), et une position de travail, dans laquelle, lorsque ledit premier groupe de colle (1) est dans ladite position d'exclusion, ladite cloison (3) est interposée entre ledit premier groupe de colle (1) et ledit plan d'avancement (4).
